(19) Europäisches Patentamt
European Patent Office
Office européen des brevets

(11)  EP 3 709 057 B1

(12)  **EUROPEAN PATENT SPECIFICATION**

(45) Date of publication and mention
of the grant of the patent:
**19.07.2023  Bulletin 2023/29**

(51) International Patent Classification (IPC):
*G01S 13/931* (2020.01)  *G01S 17/931* (2020.01)
*G01S 15/931* (2020.01)  *G01S 13/86* (2006.01)
*G01S 17/86* (2020.01)  *G01S 15/86* (2020.01)

(21) Application number: **19162287.7**

(22) Date of filing: **12.03.2019**

(52) Cooperative Patent Classification (CPC):
**G01S 13/86; G01S 13/931; G01S 15/86;**
**G01S 15/931; G01S 17/86; G01S 17/931;**
G01S 2013/9316

(54)  **RADAR ENHANCED V2X COMMUNICATIONS**

DURCH RADAR VERBESSERTE V2X-KOMMUNIKATION

COMMUNICATIONS V2X AMÉLIORÉES PAR RADAR

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**

(43) Date of publication of application:
**16.09.2020  Bulletin 2020/38**

(73) Proprietor: **Veoneer Sweden AB**
**447 83 Vårgårda (SE)**

(72) Inventor: **ERIKSSON, Olof**
**447 37 Vårgårda (SE)**

(74) Representative: **Westpatent AB**
**Almekärrsvägen 11**
**443 39 Lerum (SE)**

(56) References cited:
EP-A1- 3 379 290          US-A1- 2014 107 890
US-A1- 2016 297 436

• **CHRISTIAN LOPER ET AL: "Vehicle automation
in cooperation with V2I and nomadic devices
communication", INTELLIGENT
TRANSPORTATION SYSTEMS (ITSC), 2011 14TH
INTERNATIONAL IEEE CONFERENCE ON, IEEE,
5 October 2011 (2011-10-05), pages 650-655,
XP032023292, DOI: 10.1109/ITSC.2011.6082897
ISBN: 978-1-4577-2198-4**
• **SHIN DONGHOON ET AL: "Effects of Wireless
Communication on Integrated Risk Management
Based Automated Vehicle", 2015 IEEE 18TH
INTERNATIONAL CONFERENCE ON
INTELLIGENT TRANSPORTATION SYSTEMS,
IEEE, 15 September 2015 (2015-09-15), pages
1767-1772, XP032804199, DOI:
10.1109/ITSC.2015.287 [retrieved on 2015-10-30]**

## Description

The present disclosure relates to vehicle sensor systems, such as radio detection and ranging (radar) and light detection and ranging (lidar) systems. The disclosure also relates to vehicle to vehicle (V2V) communication systems as well as vehicle to infrastructure (V2I) communication systems.

V2V communications comprise wireless communication methods for exchanging vehicle data between transceivers in a traffic environment. V2V communications have been proposed for safety enhancing features and for more general information dissemination between vehicles.

V2I communications comprise wireless information exchange between vehicles and the traffic infrastructure, such as signposts, toll stations, and the like.

V2V and V2I are together commonly referred to as V2X communications.

Example communication standards for V2X comprise the Institute of Electrical and Electronics Engineers (IEEE) 802.11p, which is an amendment specifying extensions to the IEEE standard 802.11 for wireless local area networks (WLANs) providing wireless communications while in a vehicular environment. The Dedicated Short Range Communications (DSRC) system uses the 802.11p.

The Third Generation Partnership Program (3GPP) published V2X specifications based on the LTE communications standard in 2016. It is generally referred to as cellular V2X (C-V2X). In addition to the direct communication (V2V, V2I), C-V2X also supports wide area communication over a cellular network (V2N).

V2X communications has been proposed as a safety enhancement means, where vehicles communicate their positions, obtained via, e.g., the global positioning system (GPS) to other vehicles along with information about a current vehicle state and possibly also information about an upcoming vehicle control maneuver. This way, vehicles may inform other vehicles nearby about, e.g., an onset of an emergency brake operation.

However, GPS position estimates may be associated with relatively large errors, especially in so-called urban canyon environments where the GPS radio signals travel via multi-path propagation from satellites to the vehicle. Thus, V2X communication suffers from a certain degree of uncertainty regarding positions of the V2X transceivers.

It is an object of the present disclosure to provide methods for enhanced V2X communication which incorporate vehicle sensor data in order to improve estimated positions and other characteristics of V2X transceivers. This object is at least partly obtained by a method in a signal processing unit for associating a received V2X transmission with one or more sensor detections. The method comprises receiving the V2X transmission. The V2X transmission comprises vehicle data related to a vehicle. The method also comprises obtaining sensor data from one or more ego vehicle sensors, the sensor data comprising the one or more sensor detections. The method further comprises comparing the vehicle data to the sensor detections and associating at least one of the sensor detections with the V2X transmission based on the comparison between sensor detections and the vehicle data, whereby a sensor detection is associated with the V2X transmission if the respective sensor data corresponds to the vehicle data, where the vehicle data comprises vehicle type, and the sensor data comprises a measure of cross-section, size, or volume.

This way, erroneous location data communicated via V2X can be corrected or improved by more accurate sensor data available to the signal processing unit. Consequently, a more reliable and accurate system is obtained based on the combination of vehicle data communicated via V2X and the sensor data obtained from ego vehicle sensors.

Further advantages are obtained by the dependent claims.

There are also disclosed herein signal processing devices, systems, vehicles, and computer program products associated with the above-mentioned advantages.

## BRIEF DESCRIPTION OF THE DRAWINGS

The present disclosure will now be described in detail with reference to the appended drawings, where:

Figure 1 schematically illustrates a vehicle with a V2X transceiver and an on-board sensor;

Figures 2-5 schematically illustrate vehicles in traffic scenarios;

Figure 6 is a flow chart illustrating methods;

Figure 7 shows an example sensor signal processing system; and

Figure 8 illustrates an example computer program product;

## DETAILED DESCRIPTION

Aspects of the present disclosure will now be described more fully hereinafter with reference to the accompanying drawings. The different arrangements, devices, systems, computer programs and methods disclosed herein can, however, be realized in many different forms and should not be construed as being limited to the aspects set forth herein. Like numbers in the drawings refer to like elements throughout.

The terminology used herein is for describing aspects of the disclosure only and is not intended to limit the invention. As used herein, the singular forms "a", "an" and "the" are intended to include the plural forms as well, unless the context clearly indicates otherwise.

A vehicle may comprise a plurality of on-board sensors. These sensors provide information about a surrounding environment of the ego vehicle. The accuracy of the different sensors varies but can in some cases be very precise. This means that sensor detections may in some cases be associated with a high degree of reliability, much higher than that of the information in the vehicle data received via V2X transmission.

Herein, sensor accuracy denotes a measure of error associated with a sensor measurement. The accuracy may, e.g., relate to an average or mean-squared error associated with a range or angle measurement obtained from a radar or lidar sensor. The accuracy may also relate to other error measures, such as maximum error, or statistical measures such as a statistical distribution of sensor measurement error.

The techniques and methods disclosed herein are applicable to a wide variety of on-board sensor data types, including radar sensor data and lidar sensor data, but also, e.g., vision-related sensors such as camera and IR sensors, as well as ultrasound sensors.

Herein, velocities and locations may be absolute velocities and locations determined in some global coordinate system, or they may be relative velocities and locations determined with respect to some local coordinate system, such as a local coordinate system defined based on an ego vehicle location and heading.

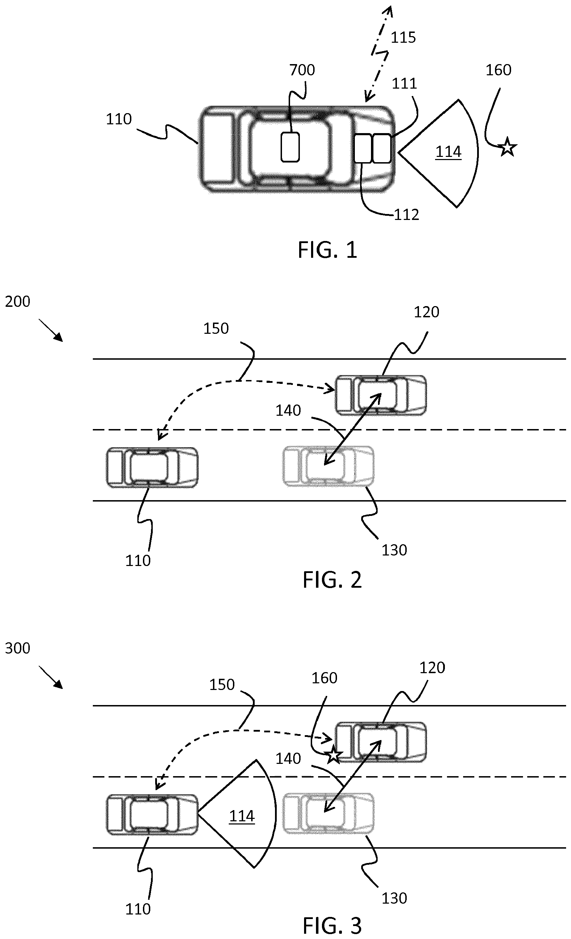

Figure 1 shows a vehicle 110 comprising at least one sensor 111. The sensor 111 is associated with a field of view (FoV) 114. The sensor may, e.g., be a radar or lidar sensor which detects objects in the sensor field of view.

An object detected by a sensor is herein denoted a sensor detection. A sensor detection may comprise different types of information depending on the type of sensor that is used. For instance, a radar sensor provides sensor data comprising a distance to the objects, and often also a relative velocity of the object with respect to the radar transceiver. Radar sensors providing Doppler information are particularly suitable for obtaining range and relative velocity sensor data. Some radar sensors also provide angle information, e.g., relative to a boresight direction of the sensor transceiver.

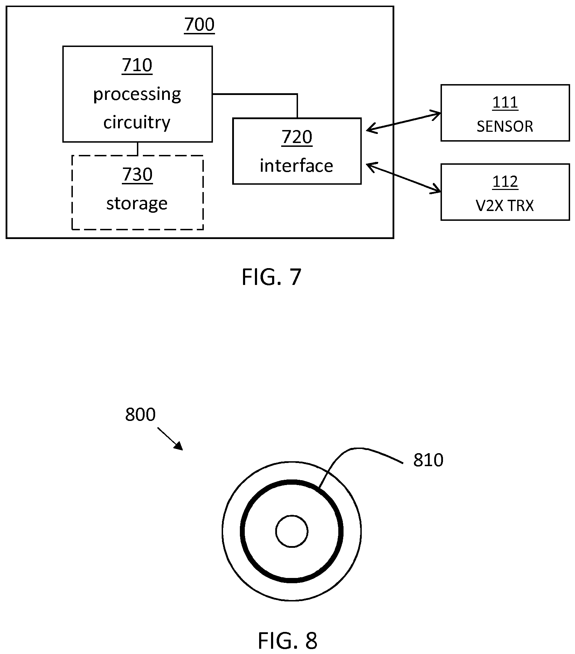

The vehicle 110 also comprises a signal processing unit 700. This unit will be discussed in more detail below in connection to Figure 7.

The vehicle 110 is equipped for V2X communications 115. This means that the vehicle comprises a transceiver 112 arranged for communicating with other transceivers in the traffic environment via V2X. These other transceivers may be comprised in other vehicles, or attached to devices in the traffic infrastructure, and also radio base stations deployed throughout the environment.

Figure 2 shows a scenario 200 where a vehicle 120 determines its location and broadcasts the location information via V2X 150 to the ego vehicle 110. The location may, e.g., be determined using a Global Navigation Satellite System (GNSS) such as the global positioning system (GPS) or the GLONASS system. This location information is commonly associated with an error 140, which can be relatively large in some situations. For instance, the GNSS signal may undergo multipath propagation which will have an effect on the positioning accuracy. Also, satellite geometry in cases where only a few satellites are visible may impact positioning accuracy negatively.

It is assumed herein that a V2X transmission comprises some type of identifier allowing a receiving unit to identify the transmitting entity and associate it with past and future transmissions from the same entity. This identifier may, e.g., comprise a medium access control (MAC) address, a key, a unique preamble, or the like.

The ego vehicle 110 in Figure 2 receives a V2X transmission 150 indicating that there is a vehicle 130 in front of the ego vehicle, even though the true location of the vehicle 120 is in another lane, due to the positioning error 140. If this vehicle 120 broadcasts, e.g., an emergency brake signal, then the ego vehicle may trigger an unnecessary braking operation.

Figure 3 illustrates a solution to the problem in Figure 2. Here, a scenario 300 is shown where the ego vehicle also comprises one or more onboard sensors with fields of view 114. The ego vehicle 110 now compares data received over V2X 150 with data obtained from the on-board sensors, such as sensor detections 160. Based on the comparison, the ego vehicle is able to associate the detection 160 to the V2X transmission 150. The vehicle data received via V2X can then be corrected using the higher accuracy sensor data, and the braking operation can be avoided since it is now clear that there is no risk of collision.

The comparison is preferably performed based on vehicle data and sensor data associated with high accuracy. This is often the case for velocity data that can be obtained from a GNSS system with high accuracy, and also from a radar sensor system based on Doppler measurements.

To summarize, in the scenario 300, the ego vehicle 110 may associate the vehicle data received via V2X transmission 150 with the sensor detection 160 and thereby enhance the V2X communication data with more reliable location data providing a more robust overall operation.

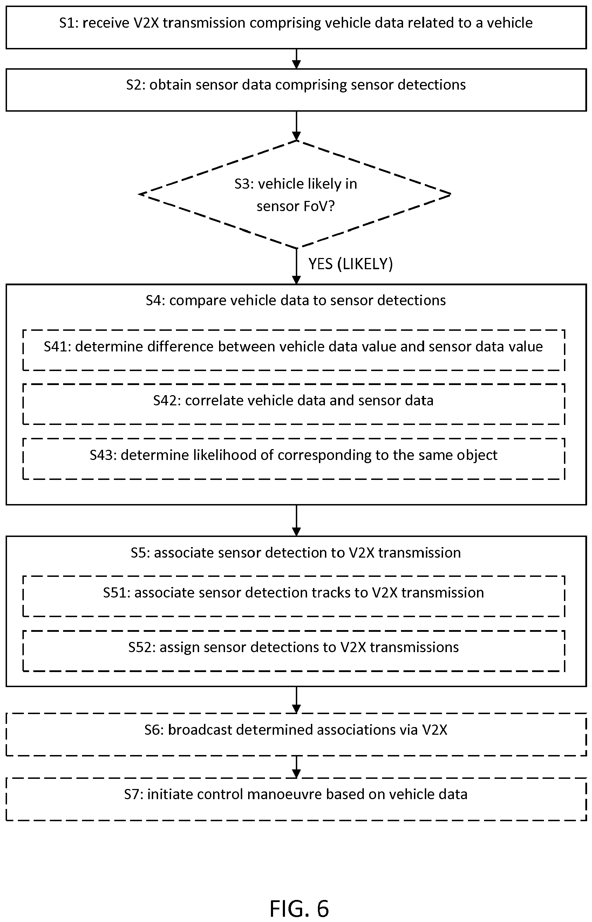

The comparison operation, i.e., when vehicle data received over V2X is compared to sensor data obtained from sensors, can be implemented in a number of different ways, which will be discussed in more detail below in connection to Figure 6.

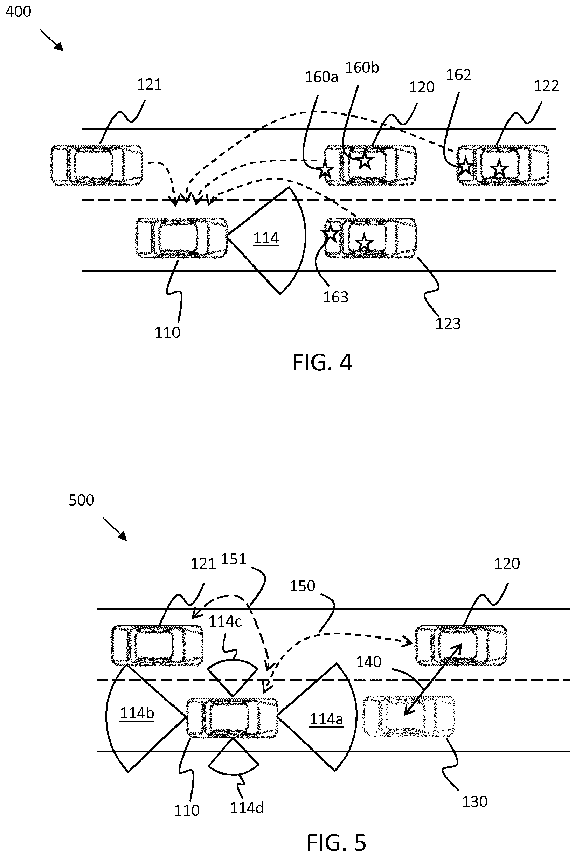

Figure 4 shows another scenario 400, where the ego vehicle 110 receives a plurality of V2X transmissions, shown by dashed lines. The ego vehicle 110 may then perform comparisons between sensor detection data 160a, 160b, 162, 163 and received V2X vehicle data. Based on this comparison, the ego vehicle may assign or associate a number of sensor detections 160a, 160b with a given received V2X transmission out of the plurality of V2X transmissions.

It is noted that some V2X transmissions may be received from sources 121 not corresponding to an object in the sensor field of view 114. Thus, some V2X transmissions may be un-associated with the sensor detections. This assignment of sensor detections to received V2X transmissions represents an assignment problem, for which solutions are available. One such solution is outlined in "An Algorithm for Positioning Relays and Point Scatterers in Wireless Systems", Rydstrom et.al., IEEE Signal Processing Letters, vol. 15, 2008.

Figure 5 schematically illustrates a scenario 500 where the ego vehicle 110 comprises a plurality of sensors, each having a respective field of view 114a, 114b, 114c, 114d. These different sensors may be associated with different estimated accuracies. The ego vehicle also receives a plurality of V2X transmissions 150, 151. Here, a V2X transmission may be associated with a sensor detection in one or more fields of view. This results in a hierarchical assignment situation, where a V2X transmission may first be assigned to a sensor field of view, and then, potentially, be associated with one or more sensor detections in that particular sensor field of view. This is an advantage, since it reduces processing requirements in some situations. For instance, a V2X transmission which has been associated with a rearward facing sensor field of view need not trigger an emergency braking operation if it contains a brake indication, since the braking vehicle is not located in front of the ego vehicle.

The associations to different sensor fields of view can be based on the vehicle data communicated over V2X. For instance, a vehicle communicating a location far in front of the ego vehicle 110 is likely associated with the forward looking sensor field of view 114a, and not with the rearward looking sensor field of view 114b, despite being associated with a large error.

Figure 6 is a flow chart illustrating methods performed by signal processing devices such as the signal processing device 700 in the ego vehicle 110. There is illustrated a method in a signal processing unit 700 for associating a received V2X transmission 150 with one or more sensor detections 160.

The method comprises receiving S1 the V2X transmission 150. The V2X transmission comprises vehicle data related to a vehicle 120 as discussed above in connection to Figures 2-5.

The method also comprises obtaining S2 sensor data from one or more ego vehicle sensors 111. This sensor data comprises the one or more sensor detections 160. As noted above, the disclosed methods are applicable to a wide range of sensors, such as radar, lidar, and vision sensors.

The method comprises comparing S4 the vehicle data to the sensor detections, and also associating S5 at least one of the sensor detections 160 with the V2X transmission 150 based on the comparison between sensor detections and the vehicle data. Hereby, a sensor detection 160 is associated with the V2X transmission 150 if the respective sensor data corresponds to the vehicle data. This means that if there is a sensor detection 160 which resembles at least part of the data in the V2X transmission, then this sensor detection will likely be associated with the V2X transmission. This allows, e.g., an ego vehicle 110 to make more informed decisions based on the received V2X transmissions, since the overall available data has been improved.

For instance, suppose the ego vehicle 110 receives two V2X transmissions and makes three sensor detections. Suppose further that one of these sensor detections are located in the same lane and in front of the ego vehicle, while the other two detections are located in other lanes more far away. In case a received V2X transmission comprises an emergency brake notification, the ego vehicle can check to see if that V2X transmission is associated with the sensor detection in front of the ego vehicle, or if it is associated with the sensor detections in the other lanes more far away. An emergency maneuver may then only be required if the V2X transmission is actually associated with the sensor detection in front of the vehicle, regardless of if the transmission comprises location information placing the V2X source vehicle in front of the ego vehicle 110. A similar scenario was discussed above in connection to Figure 3. Details of different types comparison operations will be discussed in detail below.

Some types of information are more easily obtained via V2X transmission compared to inferring the same from sensor detections. For instance, if a communication link is established between two vehicles via V2X, then accurate information about, e.g., vehicle data such as vehicle size, weight, brake pedal state, acceleration capability and the like can be directly communicated between vehicles instead of estimated based on sensor signals such as radar and lidar sensor input. In fact, some types of vehicle information, such as future intended maneuvering, are likely impossible to infer from sensor input signals.

According to aspects, as discussed above, the one or more ego vehicle sensors comprise any of; a radar sensor, a lidar sensor, an ultrasound sensor, and a camera sensor.

According to aspects, the vehicle data comprises vehicle velocity and/or acceleration data obtained from, e.g., a GNSS system, and the sensor data comprises sensor detection velocity and/or acceleration obtained from, e.g., sensor Doppler data. Sensor data indicating a given object velocity may be associated with a V2X transmission comprising data indicating a similar velocity. Also, a measure of accuracy may be transmitted along with the velocity data, which allows the signal processing system 700 to approximate a likelihood or probability that a given sensor detection actually corresponds to a certain V2X transmission.

According to aspects, the vehicle data comprises vehicle heading, and the sensor data comprises sensor detection heading. The vehicle heading may be obtained from, e.g., a compass. Sensor detection heading may be obtained from, e.g., a tracking system comprised in the signal processing unit 700.

According to the invention, the vehicle data comprises vehicle type, and the sensor data comprises a measure of cross-section area, size, or volume. If the V2X transmission says that the transmitter is arranged in connection to a large vehicle, such as a truck or the like, and the sensor detection data indicates a large object, then the association is more likely than if the sensor data clearly indicates a smaller object, like that obtained from a motorcycle or the like. Consequently, vehicle type data can be used as input when associating sensor detections to V2X transmissions, thereby obtaining a more robust determining of sensor data to vehicle data association.

According to aspects, the method also comprises determining S3 if the vehicle 120 is likely to be in a field of view of an ego vehicle sensor, based on the vehicle data, and comparing the vehicle data to the sensor detections only if the vehicle is likely to be in the field of view. This concept was discussed above in connection to Figure 5. For instance, if a location communicated by some V2X transmitter is in the middle of some first sensors field of view, but far outside a second sensors field of view, then it may not be necessary to perform the comparison operation for the second sensor in order to reduce overall processing complexity.

Determining if the vehicle is likely to be in a sensor field of view may according to one example be implemented as a hard decision, i.e., the result is a yes or no. According to other examples the result of the determining is a likelihood value or probability, i.e., a soft decision value indicating a likelihood that the vehicle 120 is present in the field of view of the ego vehicle sensor.

According to some aspects, the comparing comprises determining S41 a difference between a vehicle data value and a corresponding sensor data value. This determined difference may then, e.g., be compared to a threshold or the like to determine association. This means that if sensor data and vehicle data values are similar, then an association is likely.

According to some other aspects, the comparing comprises correlating S42 the vehicle data with the sensor data. The correlating introduces a time aspect into the comparison operation, going beyond a comparison of individual measurement values of, e.g., relative velocity. By correlating vehicle data with sensor data, it becomes possible to determine if the two quantities vary in the same way. For instance, if the vehicle data indicates an increase in velocity at the same time as the sensor data velocity increases. The correlating improves on the comparison to be more robust.

The correlating may, according to some aspects, be performed on a sign of a given value only, which provides for computational efficiency. According to such aspects, it is determined if the sign of changes agree between vehicle data and sensor data. For example, suppose vehicle data indicates a velocity which increases two samples in a row, and then decreases, and then again increases, i.e., ++-+. Suppose further that a first sensor detection indicates velocity changes according to +-+-, while a second sensor detection indicates changes according to ++-+, i.e., the same as the vehicle data. In this case the second sensor detection would likely be associated with the V2X transmission, and not the first sensor detection.

In general, the cross-correlation w(t) as function of time between a first signal u(t) and a second signal v(t) is given by

$$w(t) = \int_{-\infty}^{\infty} u^*(\tau) v(t + \tau) d\tau$$

, where * denotes complex conjugate. Correlation functions, including discrete time correlation functions, are known and will not be discussed in more detail herein.

According to further aspects, the comparing comprises determining S43, for each sensor detection, a likelihood that the vehicle data and sensor detection correspond to the same object. The comparison may also be based on statistical analysis, taking error variances into account. It is then determined how likely it is that the vehicle data error and the sensor data error together caused the observed difference between sensor data value and vehicle data value. A test statistic for determining the likelihood that a given difference d is observed can be given by, e.g.,

$$T(d) = \int_{-\infty}^{\infty} p_s(e1) p_v(e1 - d) \, de1$$

, where $p_s$ models the error distribution of the sensor data, $p_v$ models the error distribution of the vehicle data, and d is the observed difference between sensor data and vehicle data.

According to aspects, the method also comprises obtaining a measure of accuracy associated with the vehicle data, obtaining a measure of accuracy associated with the sensor data, and performing the association based on the measures of accuracy.

According to aspects, the sensor data comprises one or more tracks. Each track is then associated S51 with sensor detections obtained over time and related to a given target object. The comparing comprises determining a correspondence between successive V2X transmissions related to the same vehicle and a track of sensor detections. The associations between tracks and V2X transmissions can then be refined over time, as the track progresses and as more and more V2X transmissions are received from the same V2X transmitter. A number of hypotheses can be maintained with different associations between sensor detections and V2X transmission sources. The different hypotheses can then be discarded one after another until a most likely hypotheses comprising associations between track and V2X transmission remains.

According to aspects, the method also comprises broadcasting S6 over V2X a determined association between vehicle data received by V2X transmission and detected sensor data. This input can be used by other vehicles to improve on their own associations between sensor detections and V2X transmissions.

According to aspects, the method comprises obtaining a measure of accuracy associated with the vehicle data, obtaining a measure of accuracy associated with the sensor data, determining a joint accuracy after fusion of the vehicle and sensor data, and broadcasting the determined accuracy via V2X. The joint accuracy may, e.g., be determined based on estimates of error distribution, i.e., by considering the different data items as random variables, and the joint estimate as a new random variable having a distribution derived from the vehicle data and the sensor data.

According to aspects, the method comprises receiving a plurality of V2X transmissions from a plurality of V2X transceivers, wherein the associating comprises determining S52 an assignment of sensor detections to respective received V2X transmissions based on correspondence between vehicle data and sensor detections. This aspect was discussed above in connection to Figure 4.

According to aspects, the vehicle data comprises any of; a brake notification, a turn notification, information related to a future maneuver such as an upcoming lane change, an acceleration notification, information related to a road condition, information related to a sensor detection, information related to a driver status, information related to number of passengers in the vehicle, and information related to an environment perception.

According to aspects, the method comprises initiating S7 a control maneuver by the ego vehicle based on the vehicle data and on the association between the vehicle data and one or more sensor detections.

According to aspects, the method comprises requesting additional vehicle data from the vehicle 120 via V2X transmission. Such requests can be initiated, e.g., if no good association has been found between sensor detections and a V2X transmission. A naive such request can be, e.g., please execute a hard brake, so that I can see which echo that corresponds to your V2X transceiver.

Figure 7 shows a sensor signal processing system 700 arranged to associate a received V2X transmission 150 with one or more sensor detections 160. The sensor signal processing system comprises processing circuitry 710 arranged to;

    receive the V2X transmission 150 via an interface 720 from a V2X transceiver 112, the V2X transmission comprising vehicle data related to a vehicle 120,

    obtain sensor data via the interface 720 from one or more ego vehicle sensors 111, the sensor data comprising the one or more sensor detections 160,

compare the vehicle data to the sensor detections, and to associate at least one of the sensor detections 160 with the V2X transmission 150 based on the comparison between sensor detections and the vehicle data, whereby a sensor detection 160 is associated with the V2X transmission 150 if the respective sensor data corresponds to the vehicle data.

In more detail, Figure 7 schematically illustrates, in terms of a number of functional units, the components of a sensor signal processing system 700 according to an embodiment of the discussions herein. Processing circuitry 710 is provided using any combination of one or more of a suitable central processing unit CPU, multiprocessor, microcontroller, digital signal processor DSP, etc., capable of executing software instructions stored in a computer program product, e.g. in the form of a storage medium 730. The processing circuitry 710 may further be provided as at least one application specific integrated circuit ASIC, or field programmable gate array FPGA. The processing circuitry thus comprises a plurality of digital logic components.

Particularly, the processing circuitry 710 is configured to cause the system 700 to perform a set of operations, or steps. For example, the storage medium 730 may store the set of operations, and the processing circuitry 710 may be configured to retrieve the set of operations from the storage medium 730 to cause the system 700 to perform the set of operations. The set of operations may be provided as a set of executable instructions. Thus, the processing circuitry 710 is thereby arranged to execute methods as herein disclosed.

The storage medium 730 may also comprise persistent storage, which, for example, can be any single one or combination of magnetic memory, optical memory, solid state memory or even remotely mounted memory.

The sensor signal processing system 700 further comprises an interface 720 for communications with at least one external device, such as a vehicle sensor 111, and a V2X transceiver 112. As such the interface 720 may comprise one or more transmitters and receivers, comprising analogue and digital components and a suitable number of ports for wireline communication. The V2X transceiver 112 and the vehicle sensor 111 may be integrated into a single unit, possibly also comprising the interface 720.

The processing circuitry 710 controls the general operation of the system 700, e.g. by sending data and control signals to the interface 720 and the storage medium 730, by receiving data and reports from the interface 720, and by retrieving data and instructions from the storage medium 730. Other components, as well as the related functionality, of the control node are omitted in order not to obscure the concepts presented herein.

Figure 8 shows a computer program product 800 comprising computer executable instructions 810 to execute any of the methods disclosed herein.

## Claims

1. A method in a signal processing unit (700) for associating a received V2X transmission (150) with one or more sensor detections (160), the method comprising;

   receiving (S1) the V2X transmission (150), the V2X transmission comprising vehicle data related to a vehicle (120),
   obtaining (S2) sensor data from one or more ego vehicle sensors (111), the sensor data comprising the one or more sensor detections (160),
   comparing (S4) the vehicle data to the sensor detections, and associating (S5) at least one of the sensor detections (160) with the V2X transmission (150) based on the comparison between sensor detections and the vehicle data, whereby a sensor detection (160) is associated with the V2X transmission (150) if the respective sensor data corresponds to the vehicle data, where the vehicle data comprises vehicle type, and the sensor data comprises a measure of cross-section area, size, or volume.

2. The method according to claim 1, wherein the one or more ego vehicle sensors comprise any of; a radar sensor, a lidar sensor, an ultrasound sensor, and a camera sensor.

3. The method according to any previous claim, wherein the vehicle data comprises vehicle velocity and/or acceleration, and the sensor data comprises sensor detection velocity and/or acceleration.

4. The method according to any previous claim, wherein the vehicle data comprises vehicle heading, and the sensor data comprises sensor detection heading.

5. The method according to any previous claim, comprising determining (S3) if the vehicle (120) is likely to be in a field of view of an ego vehicle sensor, based on the vehicle data, and comparing the vehicle data to the sensor detections if the vehicle is likely to be in the field of view.

6. The method according to any previous claim, wherein the comparing comprises correlating (S42) the vehicle data with the sensor data.

7. The method according to any previous claim, wherein the comparing comprises determining (S41) a difference between a vehicle data value and a corresponding sensor data value.

8. The method according to any previous claim, wherein the comparing comprises determining (S43), for each sensor detection, a likelihood that the vehicle data and sensor detection correspond to the same object.

9. The method according to any previous claim, wherein the sensor data comprises one or more tracks, wherein each track is associated (S51) with sensor detections obtained over time and related to a given target object, wherein the comparing comprises determining a correspondence between successive V2X transmissions related to the same vehicle and a track of sensor detections.

10. The method according to any previous claim, comprising broadcasting (S6) over V2X a determined association between vehicle data received by V2X transmission and detected sensor data.

11. The method according to any previous claim, comprising receiving a plurality of V2X transmissions from a plurality of V2X transceivers, wherein the associating comprises determining (S52) an assignment of sensor detections to respective received V2X transmissions based on correspondence between vehicle data and sensor detections.

12. The method according to any previous claim, wherein the vehicle data comprises any of; a brake notification, a turn notification, information related to a future planned maneuver, information related to an upcoming lane change, an acceleration notification, information related to a road condition, information related to a sensor detection, information related to a driver status, information related to number of passengers in the vehicle, and information related to an environment perception.

13. The method according to claim 12, comprising initiating (S7) a control maneuver by the ego vehicle based on the vehicle data and on the association between the vehicle data and one or more sensor detections.

14. A sensor signal processing system (700) arranged to associate a received V2X transmission (150) with one or more sensor detections (160), the sensor signal processing system comprising processing circuitry (710) arranged to:

    - receive the V2X transmission (150) via an interface (720) from a V2X transceiver (112), the V2X transmission comprising vehicle data related to a vehicle (120),
    - obtain sensor data via the interface (720) from one or more ego vehicle sensors (111), the sensor data comprising the one or more sensor detections (160),
    - compare the vehicle data to the sensor detections, and to associate at least one of the sensor detections (160) with the V2X transmission (150) based on the comparison between sensor detections and the vehicle data, whereby a sensor detection (160) is associated with the V2X transmission (150) if the respective sensor data corresponds to the vehicle data, where the vehicle data comprises vehicle type, and the sensor data comprises a measure of cross-section area, size, or volume.

**Patentansprüche**

1. Verfahren in einer Signalverarbeitungseinheit (700) zum Zuordnen einer empfangenen V2X-Übertragung (150) zu einer oder mehreren Sensorerkennungen (160), wobei das Verfahren umfasst;

   Empfangen (S1) der V2X-Übertragung (150), wobei die V2X-Übertragung Verkehrsmitteldaten umfasst, die sich auf ein Verkehrsmittel (120) beziehen,
   Erhalten (S2) von Sensordaten von einem oder mehreren Ego-Verkehrsmittelsensoren (111), wobei die Sensordaten die eine oder mehreren Sensorerkennungen (160) umfassen, Vergleichen (S4) der Verkehrsmitteldaten mit den Sensorerkennungen, und Zuordnen (S5) mindestens einer der Sensorerkennungen (160) zu der V2X-Übertragung (150) basierend auf dem Vergleich zwischen Sensorerkennungen und den Verkehrsmitteldaten, wobei eine Sensorerkennung (160) der V2X-Übertragung (150) zugeordnet wird, wenn die jeweiligen Sensordaten mit den Verkehrsmitteldaten übereinstimmen, wo die Verkehrsmitteldaten den Verkehrstyp umfassen und die Sensordaten ein Maß für die Querschnittsfläche, die Größe oder das Volumen umfassen.

2. Verfahren nach Anspruch 1, wobei der eine oder die mehreren Ego-Verkehrsmittelsensoren jeden beliebigen von einem Radarsensor, einem Lidarsensor, einem Ultraschallsensor und einem Kamerasensor umfassen.

3. Verfahren nach einem der vorhergehenden Ansprüche, wobei die Verkehrsmittel-Daten die Geschwindigkeit und/oder Beschleunigung des Verkehrsmittels umfassen und die Sensordaten die vom Sensor erkannte Geschwindigkeit und/oder Beschleunigung umfassen.

4. Verfahren nach einem der vorhergehenden Ansprüche, wobei die Verkehrsmitteldaten den Kurs des Verkehrsmittels umfassen und die Sensordaten den vom Sensor erkannten Kurs umfassen.

5. Verfahren nach einem der vorhergehenden Ansprüche, das das Bestimmen (S3) umfasst, ob sich das Verkehrsmittel (120) basierend auf den Verkehrsmitteldaten wahrscheinlich in einem Sichtfeld eines Ego-Verkehrsmittelsensors befindet, und das Vergleichen der Verkehrsmitteldaten mit den Sensorerkennungen, wenn sich das Verkehrsmittel wahrscheinlich in dem Sichtfeld befindet.

6. Verfahren nach einem der vorhergehenden Ansprüche, wobei das Vergleichen das Korrelieren (S42) der Verkehrsmitteldaten mit den Sensordaten umfasst.

7. Verfahren nach einem der vorhergehenden Ansprüche, wobei das Vergleichen das Bestimmen (S41) einer Differenz zwischen einem Verkehrsmittel-Datenwert und einem entsprechenden Sensordatenwert umfasst.

8. Verfahren nach einem der vorhergehenden Ansprüche, wobei das Vergleichen das Bestimmen (S43) einer Wahrscheinlichkeit für jede Sensorerkennung umfasst, dass die Verkehrsmitteldaten und die Sensorerkennung demselben Objekt entsprechen.

9. Verfahren nach einem der vorhergehenden Ansprüche, wobei die Sensordaten eine oder mehrere Spuren umfassen, wobei jede Spur den im Laufe der Zeit erhaltenen und auf ein bestimmtes Zielobjekt bezogenen Sensorerkennungen zugeordnet ist (S51), wobei das Vergleichen das Bestimmen einer Entsprechung zwischen aufeinanderfolgenden V2X-Übertragungen, die sich auf dasselbe Verkehrsmittel beziehen, und einer Spur von Sensorerkennungen umfasst.

10. Verfahren nach einem der vorhergehenden Ansprüche, das das Ausstrahlen (S6) einer bestimmten Zuordnung zwischen den durch die V2X-Übertragung empfangenen Verkehrsmitteldaten und den erkannten Sensordaten über V2X umfasst.

11. Verfahren nach einem der vorhergehenden Ansprüche, das das Empfangen einer Mehrzahl von V2X-Übertragungen von einer Mehrzahl von V2X-Transceivern umfasst, wobei das Zuordnen das Bestimmen (S52) einer Zuweisung von Sensorerkennungen zu jeweiligen empfangenen V2X-Übertragungen basierend auf einer Übereinstimmung zwischen Verkehrsmitteldaten und Sensorerkennungen umfasst.

12. Verfahren nach einem der vorhergehenden Ansprüche, wobei die Verkehrsmitteldaten eines beliebigen von Bremsbenachrichtigung, Abbiegebenachrichtigung, Informationen in Bezug auf ein zukünftiges geplantes Manöver, Informationen in Bezug auf einen bevorstehenden Spurwechsel, Beschleunigungsbenachrichtigung, Informationen in Bezug auf einen Straßenzustand, Informationen in Bezug auf eine Sensorerkennung, Informationen in Bezug auf einen Fahrerstatus, Informationen in Bezug auf die Anzahl der Fahrgäste im Verkehrsmittel und Informationen in Bezug auf eine Umgebungswahrnehmung umfassen.

13. Verfahren nach Anspruch 12, das das Einleiten (S7) eines Steuermanövers durch das Ego-Verkehrsmittel basierend auf den Verkehrsmitteldaten und auf dem Zuordnen zwischen den Verkehrsmitteldaten und einem oder mehreren erkannten Sensoren umfasst.

14. Sensorsignalverarbeitungssystem (700), das angeordnet ist, um eine empfangene V2X-Übertragung (150) einer oder mehreren Sensorerkennungen (160) zuzuordnen, wobei das Sensorsignalverarbeitungssystem eine Verarbeitungsschaltung (710) umfasst, die angeordnet ist, um:

- die V2X-Übertragung (150) über eine Schnittstelle (720) von einem V2X-Transceiver (112) zu empfangen, wobei die V2X-Übertragung Verkehrsmitteldaten umfasst, die sich auf ein Verkehrsmittel (120) beziehen,
- über die Schnittstelle (720) Sensordaten von einem oder mehreren Ego-Verkehrsmittelsensoren (111) zu erhalten, wobei die Sensordaten die eine oder mehrere Sensorerkennungen (160) umfassen,
- die Verkehrsmitteldaten mit den Sensorerkennungen zu vergleichen, und mindestens eine der Sensorerkennungen (160) der V2X-Übertragung (150) basierend auf dem Vergleich zwischen Sensorerkennungen und den Verkehrsmitteldaten zuzuordnen, wobei eine Sensorerkennung (160) der V2X-Übertragung (150) zugeordnet wird, wenn die jeweiligen Sensordaten mit den Verkehrsmitteldaten übereinstimmen, wo die Verkehrsmitteldaten den Verkehrstyp umfassen und die Sensordaten ein Maß für die Querschnittsfläche, die Größe oder das Volumen umfassen.

**Revendications**

1. Procédé dans une unité de traitement de signal (700) pour associer une transmission V2X reçue (150) à une ou plusieurs détections de capteurs (160), le procédé comprenant ;

la réception (S1) de la transmission V2X (150), la transmission V2X comprenant des données de véhicule relatives à un véhicule (120),

l'obtention (S2) de données de capteurs provenant d'un ou plusieurs capteurs (111) de véhicule autonome, les données de capteurs comprenant la ou les détections de capteurs (160), la comparaison (S4) des données de véhicule aux détections de capteurs, et
l'association (S5) d'au moins une des détections de capteurs (160) à la transmission V2X (150) sur la base de la comparaison entre des détections de capteurs et les données de véhicule, une détection de capteur (160) étant associée à la transmission V2X (150) si les données de capteur respectives correspondent aux données de véhicule, les données de véhicule comprenant le type de véhicule, et les données de capteur comprenant une mesure de section transversale, de taille ou de volume.

2. Procédé selon la revendication 1, dans lequel le ou les capteurs de véhicule autonome comprennent l'un quelconque parmi : un capteur radar, un capteur lidar, un capteur à ultrasons et un capteur de caméra.

3. Procédé selon l'une quelconque des revendications précédentes, dans lequel les données de véhicule comprennent la vitesse et/ou l'accélération du véhicule, et les données de capteurs comprennent la vitesse et/ou l'accélération de détection du capteur.

4. Procédé selon l'une quelconque des revendications précédentes, dans lequel les données de véhicule comprennent le cap du véhicule, et les données de capteurs comprennent le cap de détection du capteur.

5. Procédé selon l'une quelconque des revendications précédentes, comprenant la détermination (S3) de ce que le véhicule (120) est susceptible d'être ou non dans un champ de vision d'un capteur de véhicule autonome, sur la base des données de véhicule, et la comparaison des données du véhicule aux détections du capteur si le véhicule est susceptible de se trouver dans le champ de vision.

6. Procédé selon l'une quelconque des revendications précédentes, dans lequel la comparaison comprend la corrélation (S42) des données de véhicule avec les données de capteurs.

7. Procédé selon l'une quelconque des revendications précédentes, dans lequel la comparaison comprend la détermination (S41) d'une différence entre une valeur de données de véhicule et une valeur de données de capteurs correspondante.

8. Procédé selon l'une quelconque des revendications précédentes, dans lequel la comparaison comprend la détermination (S43), pour chaque détection de capteurs, d'une probabilité que les données de véhicule et la détection de capteurs correspondent au même objet.

9. Procédé selon l'une quelconque des revendications précédentes, dans lequel les données de capteurs comprennent une ou plusieurs pistes, chaque piste étant associée (S51) à des détections de capteurs obtenues au fil du temps et liées à un objet cible donné, la comparaison comprenant la détermination d'une correspondance entre des transmissions V2X successives liées au même véhicule et une piste de détections de capteurs.

10. Procédé selon l'une quelconque des revendications précédentes, comprenant la diffusion (S6) sur V2X d'une association déterminée entre des données de véhicule reçues par transmission V2X et des données de capteurs détectées.

11. Procédé selon l'une quelconque des revendications précédentes, comprenant la réception d'une pluralité de transmissions V2X à partir d'une pluralité d'émetteurs-récepteurs V2X, l'association comprenant la détermination (S52) d'une attribution de détections de capteurs à des transmissions V2X reçues respectives sur la base d'une correspondance entre des données de véhicule et des détections de capteurs.

12. Procédé selon l'une quelconque des revendications précédentes, dans lequel les données de véhicule comprennent l'un quelconque parmi : une notification de freinage, une notification de changement de direction, des informations relatives à une future manoeuvre planifiée, des informations relatives à un changement de voie à venir, une notification d'accélération, des informations relatives à un état de la route, des informations relatives à une détection de capteurs, des informations relatives à l'état du conducteur, des informations concernant le nombre de passagers dans le véhicule, et des informations concernant une perception de l'environnement.

13. Procédé selon la revendication 12, comprenant le déclenchement (S7) d'une manoeuvre de commande par le véhicule autonome en fonction des données du véhicule et de l'association entre les données du véhicule et une ou plusieurs détections de capteurs.

14. Système (700) de traitement de signaux de capteurs agencé pour associer une transmission V2X (150) reçue à une ou plusieurs détections de capteurs (160), le système de traitement de signaux de capteurs comprenant un circuit de traitement (710) agencé pour :

- recevoir la transmission V2X (150) via une interface (720) depuis un émetteur-récepteur V2X (112), la transmission V2X comprenant des données de véhicule relatives à un véhicule (120),
- obtenir des données de capteur via l'interface (720) à partir d'un ou plusieurs capteurs (111) de véhicule autonome, les données de capteurs comprenant la ou les détections de capteurs (160),
- comparer les données de véhicule aux détections de capteurs, et

associer au moins une des détections de capteurs (160) à la transmission V2X (150) sur la base de la comparaison entre les détections de capteurs et les données de véhicule, de sorte qu'une détection de capteur (160) est associée à la transmission V2X (150) si les données de capteur respectives correspondent aux données de véhicule, les données de véhicule comprenant le type de véhicule, et les données de capteur comprenant une mesure de section transversale, de taille ou de volume.

115

700

111

110

160

114

112

**FIG. 1**

200

150

120

140

110

130

**FIG. 2**

300

150

160

120

140

114

110

130

**FIG. 3**

FIG. 4

FIG. 5

S1: receive V2X transmission comprising vehicle data related to a vehicle

S2: obtain sensor data comprising sensor detections

S3: vehicle likely in
sensor FoV?

YES (LIKELY)

S4: compare vehicle data to sensor detections

S41: determine difference between vehicle data value and sensor data value

S42: correlate vehicle data and sensor data

S43: determine likelihood of corresponding to the same object

S5: associate sensor detection to V2X transmission

S51: associate sensor detection tracks to V2X transmission

S52: assign sensor detections to V2X transmissions

S6: broadcast determined associations via V2X

S7: initiate control manoeuvre based on vehicle data

FIG. 6

700

710
processing
circuitry

730
storage

720
interface

111
SENSOR

112
V2X TRX

FIG. 7

800

810

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RYDSTROM.** An Algorithm for Positioning Relays and Point Scatterers in Wireless Systems. *IEEE Signal Processing Letters,* 2008, vol. 15